# FASCICULE DE BREVET EUROPEEN

(11) **EP 1 125 870 B1**
(45) Date de publication et mention de la délivrance du brevet: **29.09.2004**
(21) Numéro de dépôt: 01400216.6
(22) Date de dépôt: 26.01.2001
(51) Int. Cl.: B65G 47/14, B65B 3/00

(54) **Machine de convoyage et d'amenée en position de tubes, notamment de paillettes**
Maschine zum Fördern und Zuführen von Röhrchen an eine Stelle, insbesondere Pailletten
Machine for conveying and feeding tubes into position, especially spangles

(30) Priorité: 31.01.2000 FR 0001204
(43) Date de publication de la demande: 22.08.2001
(73) Titulaire: IMV Technologies, 61300 L'Aigle (FR)
(72) Inventeur: Saint-Ramon, Jean-Gérard, 61300 l'Aigle (FR); Beau, Christian, 78960 Voisins le Bretonneux (FR); Chenu, Jean-Yves, 61300 Saint-Sulpice sur Risle (FR); Toujas, Claude, 61300 Saint-Ouen sur Iton (FR)
(74) Mandataire: Santarelli

(56) Documents cités:
- FR-A- 2 700 313
- US-A- 3 315 784
- US-A- 3 458 086
- US-A- 4 418 815
- US-A- 5 160 940
- PATENT ABSTRACTS OF JAPAN vol. 010, no. 118 (M-475), 2 mai 1986 (1986-05-02) & JP 60 248507 A (KOUA DENKOU KK), 9 décembre 1985 (1985-12-09)

## Description

La présente invention concerne une machine de convoyage et d'amenée en position de tubes, notamment de paillettes (voir par e. le document US-A-3 458 086).

L'invention se rapporte également à une machine pour distribuer, remplir, sceller, imprimer des tubes tels que des paillettes.

Pour faciliter la compréhension de la description qui va suivre, l'invention sera décrite en référence à des paillettes telles celles destinées à l'insémination artificielle des espèces bovines mais on doit comprendre que sa portée ne saurait en aucun cas être limitée à une machine pour paillettes.

Une paillette est un tube fin à section circulaire pour la conservation de petites quantités de substances, notamment des substances biologiques, en particulier des liquides biologiques.

Une paillette à bouchon tripartite constitué par deux tampons d'une substance fibreuse enserrant une poudre susceptible de se transformer au contact d'un liquide en une pâte ou gel imperméable adhérant à la paroi du tube en créant un bouchon étanche, connue sous la dénomination de "paillette française", a été divulguée pour la première fois dans le Brevet Français de la Demanderesse N° 995 878.

La Demanderesse a également développé d'autres paillettes à bouchon non absorbant.

Le FR-A-2 762 210 de la Demanderesse décrit une paillette se composant d'un segment de tube muni à l'intérieur de l'une de ses extrémités d'un moyen d'obturation constitué d'un bouchon monobloc microporeux hydrophobe. Les FR-A-2 771 284 et FR-A-2 771 285 de la Demanderesse décrivent respectivement une paillette avec insert adaptateur et une paillette avec bouchon bipartite.

Le remplissage d'une paillette est en général effectué par aspiration à travers le bouchon au moyen d'une pompe à vide. Une opération de scellage à l'extrémité opposée du bouchon permet d'obturer la paillette.

Les paillettes doivent être distribuées, et transférées avant d'être remplies, scellées et imprimées.

Il existe des machines permettant d'automatiser ces opérations.

Un type de machine est conçu sur un barillet rotatif et une trémie fixe avec rampe de transfert des paillettes. Le barillet est soumis à un déplacement alternatif pour permettre la mise en place des paillettes dans les rainures périphériques.

L'inconvénient de cette machine réside dans une cadence peu élevée et la répartition des paillettes n'y est pas toujours correcte

Un autre type de machine est conçu sur un barillet rotatif et une trémie oscillante. L'oscillation de la trémie durant la phase d'arrêt de la machine permet la mise en place des paillettes dans les rainures périphériques du barillet. L'inconvénient de cette machine est d'être complexe et la répartition des paillettes n'y est pas toujours correcte.

En outre, les machines qui ont un principe d'entraînement par énergie pneumatique présentent l'inconvénient d'imposer un compresseur dans le local d'utilisation. D'autre part, l'utilisation d'air comprimé dans des locaux à empoussièrement contrôlé est une incommodité.

La Demanderesse a conçu une machine, qui est toujours en exploitation, basée sur une trémie fixe avec rouleau de démêlage et système d'indexage mécanique pour charger les paillettes trois par trois dans les rainures des bandes transporteuses qui assurent le convoyage aux postes de remplissage et de soudage.

Cette machine est très fiable et offre l'avantage de présenter des paillettes dans un plan horizontal aux postes de remplissage et de soudage. Elle présente toutefois l'inconvénient d'être complexe et bruyante.

De plus, les machines précitées sont peu favorables à l'ergonomie de l'utilisateur.

Un objet de la présente invention est de fournir une machine ne présentant pas les inconvénients des machines connues et utilisées jusqu'à présent, notamment d'être simples et peu bruyantes.

Un autre objet de l'invention est de fournir une machine favorable à l'ergonomie de l'utilisateur.

Ces objets, ainsi que d'autres qui apparaîtront à la lecture de la description ci-après, sont satisfaits par la machine objet de l'invention, qui est destinée à permettre l'automatisation des opérations de distribution et de transfert, c'est-à-dire de convoyage et d'amenée en position, de tubes, notamment de paillettes.

La présente invention fournit donc une machine de convoyage et d'amenée en position de tubes comportant une goulotte à poste d'alimentation verticale desdits tubes, des bandes transporteuses et un moteur assurant le mouvement desdites bandes transporteuses, caractérisée en ce que lesdites bandes transporteuses comprennent deux zones : une zone de chargement desdits tubes et une zone de positionnement desdits tubes, ainsi qu'un évidement longitudinal coopérant avec un moyen presseur fixe permettant l'insertion desdits tubes, placés par ladite goulotte dans ladite zone de chargement, dans ladite zone de positionnement pendant un déplacement longitudinal desdites bandes sous ladite goulotte. Le moyen presseur est par exemple un presseur incliné.

Dans un mode de réalisation avantageux de l'invention, les bandes transporteuses ont une forme permettant l'association d'un vé de chargement, d'une gorge à section circulaire et d'un évidement longitudinal.

Avantageusement, la machine de l'invention comprend en outre une pompe à vide assurant le remplissage des tubes et un poste de soudage assurant le soudage des tubes. L'intégration à la machine de la pompe à vide de remplissage permet une réduction du bruit et elle simplifie de surcroît le câblage électrique et les raccords pneumatiques.

La machine peut également comprendre un indexeur placé entre le moteur et les bandes transporteuses assurant des phases d'arrêt et de déplacement desdites bandes transporteuses, par exemple un indexeur à came.

Dans un mode de réalisation particulièrement intéressant de l'invention, la machine de l'invention comprend en outre un distributeur d'impression, par exemple, une tête d'impression à jet d'encre, permettant l'impression des tubes.

L'invention sera décrite à présent plus en détails, mais de façon non limitative, en référence aux Figures annexées dans lesquelles :

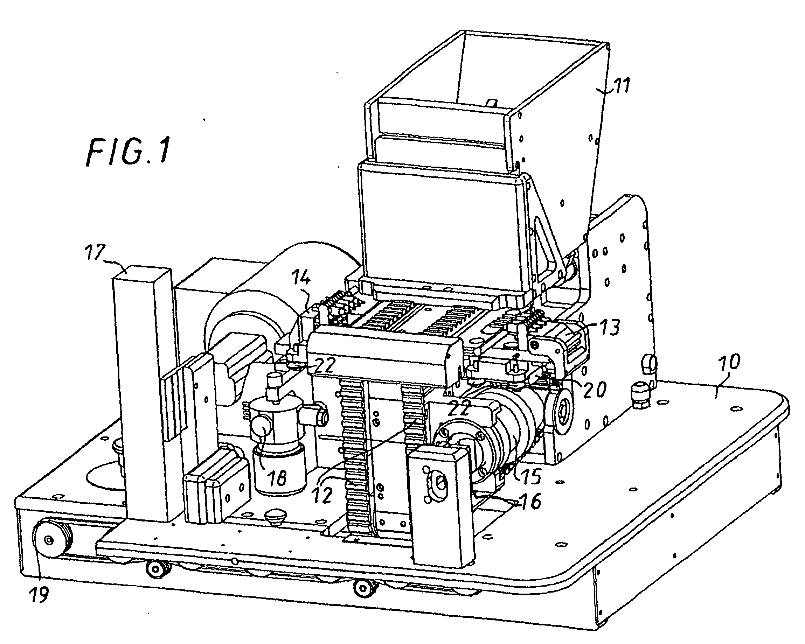

- la Figure 1 est une vue générale en perspective de la machine de l'invention,

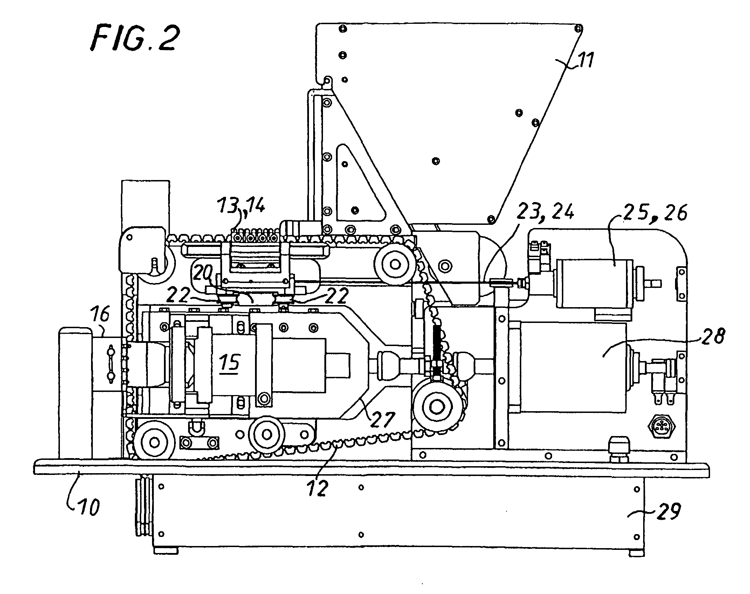

- la Figure 2 est une vue de côté de la Figure 1,
- la Figure 3 est une vue de dessus de la Figure 1,
- la Figure 4 est une vue schématique en coupe d'un détail de la machine,
- la Figure 5 est une vue en perspective des bandes transporteuses de la machine de l'invention,
- la Figure 6 est une vue de côté de la Figure 5 montrant une paillette amenée et une paillette positionnée,
- la Figure 7 est une vue de côté schématique latérale d'un détail de la machine.

Sur le bâti 10, on voit la trémie de distribution 11 des paillettes prêtes à remplir, les bandes transporteuses 12 pour l'amenée (convoyage) et le positionnement (la répartition) des paillettes quatre par quatre.

Dans le mode de réalisation représenté, la machine de l'invention comprend un poste de soudure avec un ensemble sonotrode 15 et enclume 16, une tête d'impression à jet d'encre 17, un réglage de la pompe à vide 18. Le distributeur 19 permet le transfert des paillettes remplies et soudées sous la tête d'impression à jet d'encre.

Les chariots porte-aiguilles 13 et 14 sont montés sur un rail 20 avec galets de guidage 22.

Le déplacement longitudinal est obtenu par des câbles 23 et 24 et des électroaimants 25 et 26. Les déplacements simultanés des chariots sont obtenus par une information provenant d'un automate du coffret de commande. Il faut noter que, dans la même configuration, en lieu et place d'un l'électroaimant, on peut prévoir un moteur pas-à-pas câblé en moteur synchrone.

Le porte-sonotrode 27 est un chariot de guidage, commandé par un électroaimant 28.

Il faut noter que, dans la même configuration, en lieu et place d'un électroaimant, on peut prévoir un actionneur linéaire basé sur un moteur pas-à-pas avec vis sortante antirotation.

Dans la partie inférieure 29 du socle 10 sont intégrés les câblages électriques, des amplificateurs de cellules de détection, le moteur d'entraînement du distributeur permettant de transférer les paillettes sous la tête à jet d'encre.

Tous ces éléments sont naturellement protégés de toute projection de liquides.

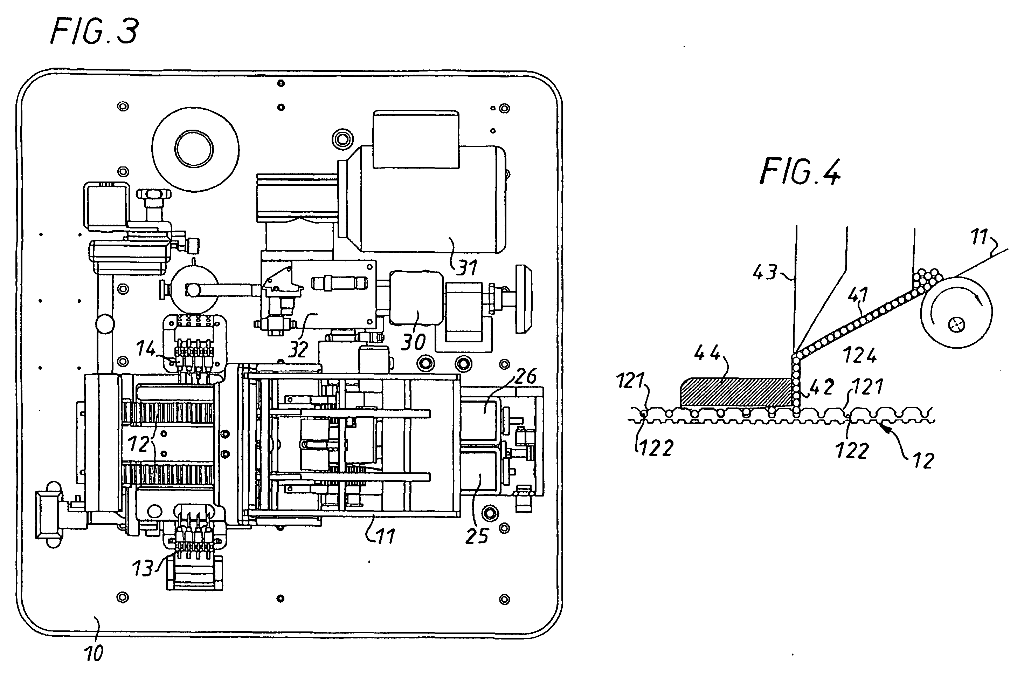

La Figure 3 montre la pompe à vide de remplissage 30, le moteur 31 et l'indexeur intégré 32 permettant l'entraînement des bandes transporteuses 12.

La trémie 11 distributrice des paillettes est fixe. Elle est munie d'une rampe inclinée 41 de transfert des paillettes et d'une goulotte verticale 42. Le passage de la rampe à la goulotte est autorisé par une palette 43. Cette palette permet de définir un nombre de paillettes au démarrage et à l'arrêt du cycle en respectant le multiple de quatre, la machine distribuant des paillettes quatre par quatre.

Au droit de la goulotte verticale sont disposées deux bandes transporteuses 12 en polyuréthanne, armées de câbles métalliques, insensibles aux variations de température. Ces bandes transporteuses individualisent les paillettes et les répartissent dans quatre rainures consécutives.

Les bandes transporteuses sont animées d'un mouvement de défilement longitudinal à vitesse constante.

Conformément à l'invention, les bandes transporteuses 12 comprennent deux zones :
- une zone de chargement 121 des paillettes 124,
- une zone de positionnement 122 des paillettes 124.

Les bandes transporteuses 12 comprennent un évidement longitudinal 123 coopérant avec un moyen presseur 44 qui permet l'insertion des paillettes 124 dans la zone de positionnement 122 pendant un déplacement longitudinal des bandes sous la goulotte verticale 42.

Un presseur incliné 44 fixé sur la trémie permet, durant le déplacement des bandes transporteuses 12, d'insérer les paillettes 124 dans une zone de chargement 121 vers une zone de positionnement 122.

Le fonctionnement de la machine représentée est basé sur un cycle discontinu :
- temps de transfert de paillettes : translation des bandes transporteuses,
- temps technologique de remplissage et de soudage : arrêt des bandes transporteuses.

Le remplissage et le soudage sont réalisés simultanément.

Le mouvement continu des bandes transporteuses est obtenu par un moteur qui tourne en permanence durant le fonctionnement de la machine. Ce moteur entraîne un indexeur intégré 32 à cames dont le profil permet de respecter le cycle ci-dessus. L'avantage d'un tel indexeur est qu'il évite tout système mécanique ou électronique de positionnement. En outre, ce dispositif est sans jeu, donc sans usure et sans bruit. Il est possible de se procurer de tels indexeurs auprès, par exemple, des sociétés SOPAP ou FERGUSON.

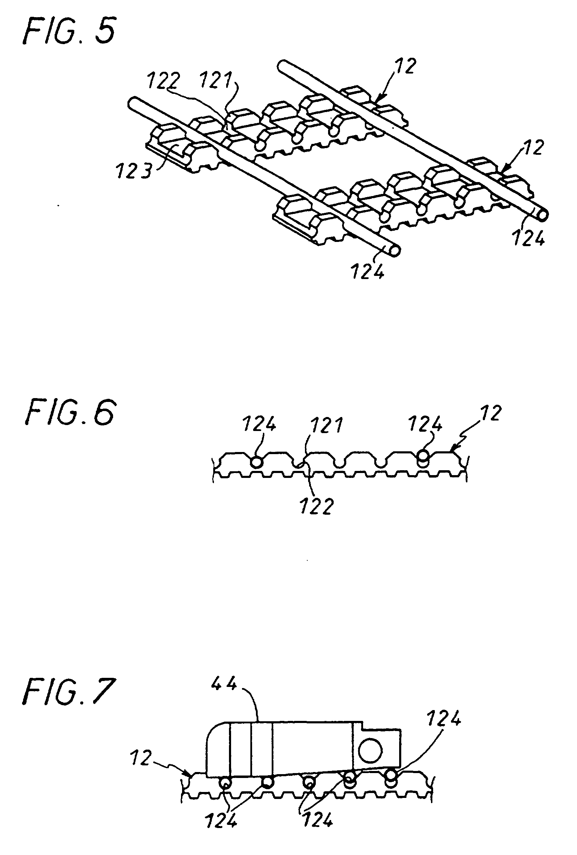

Sur les Figures 5 et 6, on voit une paillette 124 en chargement (paillette amenée), à droite, et en positionnement (paillette positionnée), à gauche.

Sur la Figure 7, on voit l'action du presseur incliné 44 sur une bande transporteuse 12 pour positionner les paillettes chargées.

L'homme de l'art comprendra que bien que l'invention ait été décrite et illustrée pour des modes de réalisation particuliers, de nombreuses variantes peuvent être envisagées tout en restant dans le cadre de l'invention tel que défini dans les revendications annexées.

## Revendications

1. Machine de convoyage et d'amenée en position de tubes (124) comportant une goulotte (42) à poste d'alimentation verticale desdits tubes, des bandes transporteuses (12) et un moteur (31) assurant le mouvement desdites bandes transporteuses, **caractérisée en ce que** lesdites bandes transporteuses comprennent deux zones : une zone de chargement (121) desdits tubes et une zone de positionnement (122) desdits tubes, ainsi qu'un évidement longitudinal (123) coopérant avec un moyen presseur fixe (44) permettant l'insertion desdits tubes, placés par ladite goulotte (42) dans ladite zone de chargement, dans ladite zone de positionnement pendant un déplacement longitudinal desdites bandes sous ladite goulotte (42).

2. Machine selon la revendication 1, **caractérisée en ce que** les bandes transporteuses ont une forme permettant l'association d'un vé de chargement, d'une gorge à section circulaire et d'un évidement longitudinal.

3. Machine selon l'une des revendications 1 et 2, **caractérisée en ce qu'**elle comprend en outre une pompe à vide (18) assurant le remplissage des tubes et un poste de soudage (15) assurant le soudage des tubes.

4. Machine selon l'une quelconque des revendications 1 à 3, **caractérisée en ce qu'**elle comprend un indexeur (32) placé entre le moteur et les bandes transporteuses assurant des phases d'arrêt et de déplacement desdites bandes transporteuses.

5. Machine selon la revendication 4, **caractérisée en ce que** l'indexeur est à came.

6. Machine selon l'une quelconque des revendications 1 à 5, **caractérisée en ce qu'**elle comprend en outre un distributeur d'impression (17) permettant l'impression des tubes.

## Patentansprüche

1. Maschine zum Fördern und Positionieren von Röhrchen (124) mit einer Förderrutsche bzw. -rinne (42) an der Stelle der vertikalen Zufuhr der Röhrchen, Transportbändern (12) und einem Motor (31) zum Antrieb der Transportbänder, **dadurch gekennzeichnet, daß** die Transportbänder zwei Zonen, eine Zone (121) zur Beschickung bzw. Beladung mit den Röhrchen und eine Zone (122) zur Positionierung der Röhrchen, sowie eine Längsausnehmung (123) aufweisen, welche mit einem Druckmittel (44) zusammenwirkt, so daß das Einlegen bzw. Einsetzen der Röhrchen in die Positionierungszone während einer Längsverschiebung der Bänder unter der Förderrutsche bzw. -rinne (42) ermöglicht wird.

2. Maschine nach Anspruch 1, **dadurch gekennzeichnet, daß** die Transportbänder eine Form aufweisen, welche das Verbinden bzw. Zusammenwirken eines Beladungsprismas, einer kreisförmigen Vertiefung und einer Längsausnehmung ermöglicht.

3. Maschine nach einem der Ansprüche 1 und 2, **dadurch gekennzeichnet, daß** die Maschine außerdem eine Unterdruckpumpe (18) zum Befüllen der Röhrchen und eine Verschweißeinrichtung (15) zum Verschweißen der Röhrchen aufweist.

4. Maschine nach einem der Ansprüche 1 bis 3, **dadurch gekennzeichnet, daß** die Maschine eine zwischen dem' Motor und den Transportbändern angeordnete Impulseinrichtung (Impulsgeber) (32) aufweist, welche Anhalte- und Verschiebungsphasen der Transportbänder ermöglicht.

5. Maschine nach Anspruch 4, **dadurch gekennzeichnet, daß** die Impulseinrichtung gezahnt ist.

6. Maschine nach einem der Ansprüche 1 bis 5, **dadurch gekennzeichnet, daß** die Maschine außerdem eine Bedruckungseinrichtung (17) aufweist, welche das Bedrucken der Röhrchen ermöglicht.

## Claims

1. A machine for conveying and moving into position tubes (124), the machine including a chute (42) with a vertical feed station for said tubes, conveyor belts (12) and a motor (31) for moving said conveyor belts, **characterized in that** said conveyor belts have two areas, namely an area (121) for loading said tubes and an area (122) for positioning said tubes, and a longitudinal recess (123) co-operating with fixed pressing means (44) for inserting said tubes, placed by said chute (42) in said loading area, into said positioning area during longitudinal movement of said belts under said chute (42).

2. A machine according to claim 1, **characterized in that** the conveyor belts have a shape enabling association of a loading vee, a circular section groove and a longitudinal recess.

3. A machine according to either of claims 1 and 2, **characterized in that** it further comprises a vacuum pump (18) for filling the tubes and a welding station (15) for welding the tubes.

4. A machine according to any of claims 1 to 3, **characterized in that** it includes an indexing member (32) between the motor and the conveyor belts assuring the stationary phases and moving phases of said conveyor belts.

5. A machine according to claim 4, **characterized in that** the indexing member is of the cam type.

6. A machine according to any of claims 1 to 5, **characterized in that** it further includes a printing distributor (17) for printing the tubes.
